(19) Europäisches Patentamt / European Patent Office / Office européen des brevets

(11) **EP 1 664 869 B1**

(12) **EUROPEAN PATENT SPECIFICATION**

(45) Date of publication and mention
of the grant of the patent:
**18.02.2015 Bulletin 2015/08**

(51) Int Cl.:
*G02B 6/255* (2006.01)  *G02B 6/28* (2006.01)

(21) Application number: **04761811.1**

(22) Date of filing: **08.09.2004**

(86) International application number:
**PCT/CA2004/001648**

(87) International publication number:
**WO 2005/029146 (31.03.2005 Gazette 2005/13)**

(54) **OPTICAL COUPLER COMPRISING MULTIMODE FIBERS AND METHOD OF MAKING THE SAME**

OPTISCHER KOPPLER MIT MEHRMODUS-FASERN UND HERSTELLUNGSVERFAHREN DAFÜR

COUPLEUR OPTIQUE COMPORTANT DES FIBRES MULTIMODE ET SON PROCEDE DE FABRICATION

(84) Designated Contracting States:
AT BE BG CH CY CZ DE DK EE ES FI FR GB GR HU IE IT LI LU MC NL PL PT RO SE SI SK TR

(30) Priority: **19.09.2003 CA 2441918**

(43) Date of publication of application:
**07.06.2006 Bulletin 2006/23**

(73) Proprietor: **ITF Technologies Optiques Inc.
ITF Optical Technologies Inc.
Montreal,
Quebec H4N 2G7 (CA)**

(72) Inventors:
- **GONTHIER, François**
  Montreal, Quebec H3P 2T9 (CA)
- **MARTINEAU, Lilian**
  Montreal, Quebec H3T 1W8 (CA)
- **SEGUIN, François**
  Montreal, Quebec H9W 4T9 (CA)
- **VILLENEUVE, Alain**
  Montreal, Quebec H3P 3J8 (CA)
- **FAUCHER, Mathieu**
  Montreal, Quebec H3L 2L4 (CA)
- **AZAMI, Nawfel**
  Montreal, Quebec H4L 5A6 (CA)
- **GARNEAU, Marc**
  Montreal, Quebec H4L 2N3 (CA)

(74) Representative: **Lind, Robert
Marks & Clerk LLP
Fletcher House
Heatley Road
The Oxford Science Park
Oxford OX4 4GE (GB)**

(56) References cited:
EP-A1- 1 054 276   DE-A1- 4 015 978
US-A- 4 205 901   US-A- 4 392 712
US-A- 5 381 503   US-A- 5 664 037
US-A- 5 864 644   US-A1- 2003 128 723
US-B1- 6 414 262

- **LUCENT TECHNOLOGIES: 'The photonics and design and applications handbook - 2002', 2002 article 'Fiber optics: understanding the basics', pages H154 - H157, XP008081789**
- **OXFORD ELECTRONICS LTD APPLICATION NOTE no. M105, June 1999, pages 1 - 2, XP003012280**
- **SHIRAISHI K ET AL: "LIGHT-PROPAGATION CHARACTERISTICS IN THERMALLY DIFFUSED EXPANDED CORE FIBERS", JOURNAL OF LIGHTWAVE TECHNOLOGY, IEEE SERVICE CENTER, NEW YORK, NY, US, vol. 11, no. 10, 1 October 1993 (1993-10-01), pages 1584-1591, XP000418376, ISSN: 0733-8724, DOI: 10.1109/50.249900**

**Description**

FIELD OF THE INVENTION

This invention relates generally to optical fiber couplers. More particularly, the invention pertains to optical fiber couplers for coupling a bundle of multimode fibers, containing a few-mode fiber in their centre, to a large core area double clad fiber. The invention also provides a method for making such coupler.

BACKGROUND OF THE INVENTION

Multimode optical fibers are used in a large number of applications, such as communications networks, sensors systems, avionic and aerospace industry, medical instruments, fiber bundles, and fiber amplifiers and lasers. One of the basic components in most of these applications is the multimode fiber coupler, that can take several different forms, such as the power splitter, the tap coupler, the star coupler or the power combiner. All these components essentially take several multimode fibers and bundle them together by either mechanically holding them or twisting them together, and the structure is fused and/or tapered in order to induce coupling between the fibers from the input to the output. The basic description of this coupling is given in U.S. Patent No. 4,291,940 of Kawasaki et al. It discloses that if two multimode fibers are placed side by side and then fused together using a heat source, there is some optical power transfer from one fiber to the other. Such transfer can be increased as the structure is pulled and tapered.

This basic fused-tapered concept was used in several subsequent patents such as U.S. Patents Nos. 4,392,712 and 4,330,170 where it became apparent that this procedure could also be used for more than two fibers, thus creating M x N fused taper bundles, where M is the input number of fibers and N is the output number of fibers. Moreover, the fuse and taper process received some further improvements such as described in U.S. Patents Nos. 4,426,215 and 4,550,974 where several techniques are disclosed to improve the uniformity of the power distribution in the fused-tapered multimode fiber bundles. In particular, U.S. Patent No. 4,550,974 describes a process presently known in the art as the "cut and fuse" process where a fused tapered multimode fiber bundle is cut and then fused together again to produce a better mode scrambling effect and thus better uniformity. From this process, it quickly became apparent that one did not need to fuse the same two coupler halves together, but one could put together two different coupler halves, thereby creating another way of making M x N couplers.

As applications of multimode fiber evolved, there came another application that can benefit from this process. The double clad fiber amplifiers or lasers use a type of fiber, the double clad fiber (DCF), that has a single-mode core doped with rare-earth ions, such as ytterbium, erbium or neodinium, that is surrounded by an optical cladding of far larger diameter. This cladding is a highly multimode waveguide and it is surrounded by another optical cladding having a lower refractive index, which may be a polymer cladding. To amplify an optical signal propagating through the DCF core, one needs to optically pump the rare-earth ions. This pump optical power can be injected in the core in the same manner as in single-mode fiber amplifiers, but the purpose of the double clad is that the pump power can be injected into the inner cladding which surrounds the core. Because some of the cladding modes travel through the core, they provide energy to the rare-earth ions and enable the amplification of the signal to occur. Moreover, because the inner cladding is far larger than the core, it is possible to input a greater number of pump laser light and spatially multiplex the same in the cladding, rather than wavelength or polarization multiplex the pump laser in the core. Thus, a much greater amount of pump power is available in DCF for the amplification than in single-mode fiber amplifiers.

In some DCF amplifiers or lasers, the coupling is achieved by bulk optics, coupling the pump power through lens and mirrors into the double cladding. U.S. Patent No. 5,864,644 describes how this can be done with a multimode taper bundle using a similar approach as the "cut and fuse" technique, where the second coupler half is replaced by a DCF. The patent also describes how it is possible to include in the bundle a single-mode fiber, that will connect to the single-mode core of the DCF, thus allowing a signal to go through the coupler and be amplified or reversely, if the coupler is used in a counter pump configuration (i.e. the pump power and the signal go in the opposite direction), to let the signal out of the amplifier with minimum loss. A modification to this structure is disclosed in U.S. Patent No. 6,434,302, where it is stated that for better performance, the tapered bundle and DCF structure must be tapered further than the diameter of the DCF to improve mode distribution for improved gain efficiency.

U.S. Patent Application Publication No. 2003/0128723 disclosed another form of couplers using bundles of multimode fibers and DCF. However, in this application, the bundle of multimode fibers, which is spliced to a DCF, is provided with a centrally located photonic fiber instead of a conventional single-mode fiber. As it is known in the art, photonic fibers are a special type of fibers which are not fully constituted by a solid transparent material. On the contrary, when shown as a section, photonic fibers exhibit a plurality of air holes which provide certain optical properties- Notwithstanding the differences between photonic fibers and conventional fibers, the photonic fibers used in the above-mentioned patent application are either multimode photonic fibers or double-cladding fibers.

In high power amplifiers and lasers, as the power available for pump is greater, the power output of the amplifier or laser is also larger, to the point where the light intensity in the doped glass becomes large enough to damage the glass or to produce undesirable non-linear effects, such as Raman or Brilloin scattering. Thus, a new generation of DCF fibers has been developed to address these high power situations. These fibers have a large core area so that, even if the power is high, the intensity in the core remains reasonable. Even if one decreases the index step of the core waveguide, the large core is not necessarily single-mode at the laser wavelength. The fiber core is few-moded. One must carefully excite the core fundamental mode to have the amplification in that mode, that will produce the best output beam. This problem is not addressed in U.S. Patents Nos. 5,864,644 and 6,434,302 which deal only with a single-mode connection. A single-mode connection is simple because one cannot excite anything other than the fundamental mode in the connection, even if the splice between the tapered fiber bundle and the DCF is bad. In the few-mode case, this connection is crucial to the proper functioning of the amplifier.

Thus, there is a need for a coupler that provides a connection of a bundle of multimode pump fibers that has a few-mode signal fiber in its centre, to a large area core double clad fiber (LACDCF).

**OBJECTS AND SUMMARY OF THE INVENTION**

It is an object of the present invention to provide an optical coupler with a fused fiber bundle of multimode fibers having a few-mode fiber in their centre, to be connected to LACDCF.

Another object of the present invention is to provide an input end fused fiber periphery or fiber bundle transverse geometry that would preserve the modal content of the few-mode core in such coupler.

A still further object of the present invention is to provide a method of making a coupler with the above mentioned properties, including alignment and splicing of the fiber bundle to the LACDCF.

Other objects and advantages of the invention will become apparent from the following description thereof.

As is known, a single-mode fiber normally has a mode field diameter of up to $9\mu$m, whereas a few-mode fiber usually has a mode field diameter of 30-50$\mu$m, while multimode fibers generally have a core mode field diameter above 50$\mu$m. Also, in the LACDCFs the core has a mode field diameter which is similar to that of the core of the few-mode fiber.

In a single-mode connection, one deals with two cores that have the same mode field diameter, because at one point in the tapering process, the mode field diameter increases rather than decreasing. One can thus, by tapering a bundle of fibers that include a single-mode fiber, match the mode field of the single-mode core of the tapered bundle to the mode of the DCF single-mode core, as disclosed, for instance, in U.S. Patent No. 6,434,302. This, however, is not possible to achieve with a few-mode fiber, unless one tapers the bundle to the point where the two fiber core becomes single-mode. Thus, the basic difference in connecting the LACDCF to a bundle with a few-mode fiber is that the signal transmitting the few-mode fiber cannot simply be tapered to achieve the connection (as in the case of single-mode fibers), and must be made to match the modal content of the LACDCF.

Thus, in essence, according to the present invention, there is provided an optical coupler which comprises:

(a) a bundle of a plurality of multimode fibers having a signal fiber in the centre, the bundle comprising a fused end portion with an output end having a periphery. The signal fiber is a few-mode fiber having a core through which an optical signal is to be transmitted;

(b) a large area core double clad fiber (LACDCF), having a core through which the signal is to be transmitted, an inner cladding having a first refractive index and an outer cladding having a second, lower, refractive index, which outer cladding may be made of a polymer, said LACDCF having an end portion from which the outer cladding is removed if it is made of a polymer, said end portion terminating with an input end the inner cladding of which has a predetermined circumference, into which input end of the LACDCF the optical signal is to be transmitted ;

(c) said output end of the bundle and the input end of the LACDCF are aligned and fusion-spliced such that the periphery of the output end of the bundle fits within the predetermined circumference of the inner cladding at the input end of the LACDCF, and such that the core of the few-mode fiber is precisely modally aligned and matched with the core of the LACDF such as to preserve fundamental mode transmission from the core of the few-mode fiber to the core of the LACDCF, and wherein the few-mode fiber (10) at the output end is a fiber with a core expanded from a single mode fiber.

The multimode fibers of the bundle end portion may also be tapered before being fused in order to fit within the circumference of the inner cladding of the input end of the LACDCF.

The method of the present invention essentially comprises:

(a) bundling a central few-mode fiber with a plurality of surrounding multimode fibers so that the surrounding multimode fibers are placed generally symmetrically around the central few-mode fiber, the signal fiber having a core through which an optical signal is to be transmitted, the bundle having an end portion;

(b) fusing the end portion of the bundle, the fused end portion having an output end having a periphery;

(c) providing a large area core double clad fiber (LACDCF) having a core through which the optical signal is to be transmitted, and inner cladding having a first refractive index, and an outer cladding having a second refractive index which is lower than the first refractive index, the inner cladding having a predetermined circumference and the DCF having an end portion terminating with an input end

(d) splicing the fused output end of the bundle to the input end of the LACDCF in such a manner that the core of the few-mode fiber is precisely modally aligned with the core of the LACDCF so as to preserve fundamental mode transmission from the few-mode fiber to the LACDCF, and wherein the few-mode fiber (10) has a core (12) near the output end of the bundle, which is expanded from an initial single-mode fiber core.

The multimode fibers at the output end of the bundle may also be tapered prior to being fused, so as to fit within the circumference of the inner cladding of the input end of the LACDCF.

BRIEF DESCRIPTION OF THE DRAWINGS

The invention will now be described with reference to the appended drawings, in which:

Fig. 1 is a schematic side view representation of a coupler arrangement in which a bundle of three fibers comprising two multimode fibers and a few-mode fiber in the centre is connected to the LACDCF;

Fig. 2 is a section view of the splicing region of Fig. 1 along line A-A;

Fig. 3 is a perspective view of the coupler shown in Fig. 1;

Fig. 4 is a schematic side view representation of a coupler in which a bundle of more than two multimode fibers with a few-mode fiber in the centre is connected to the LACDCF;

Fig. 5 is a schematic side view representation of an embodiment of the present invention where the core of a single-mode fiber has been expanded and connected to a core of a few-mode fiber before splicing with the LACDCF;

Fig. 6 is a schematic side view representation of another embodiment in which the core of a single-mode fiber has been expanded to a few-mode fiber level just before splicing with the LACDCF;

Fig. 7 is a schematic side view representation where the core of the few-mode fiber has been expanded prior to bundling and then fused and tapered within the bundle fusion region to the appropriate mode size before splicing with the LACDCF;

Figs. 8A to 8K represent a schematic view of different fiber bundle configurations that may be used within the scope of the present invention.

DETAILED DESCRIPTION OF THE INVENTION

Preferred embodiments of the invention will now be described with reference to the appended drawings in which the same parts are designated by the same reference numbers.

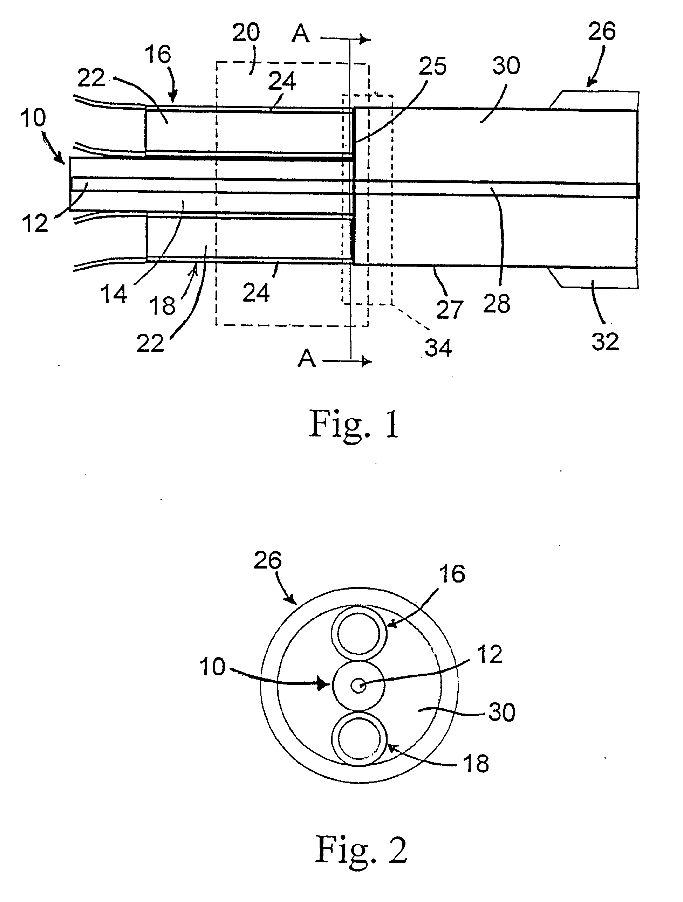

Fig. 1 illustrates a few-mode fiber 10 having a core 12 of 50$\mu$m diameter and a cladding 14 of 125 $\mu$m diameter. This few-mode fiber 10 is bundled with two multimode fibers 16, 18 and the bundle is fused in the fusion region 20. The multi-mode fibers 16, 18 each have a core 22 of 105 $\mu$m diameter and a cladding 24 of 125 $\mu$m diameter. The three fibers total 375 $\mu$m in their longitudinal periphery before fusion and 350 $\mu$m after fusion. The fused end of this structure was then cleaved, aligned and spliced to the end 25 of the LACDCF 26 having a large area core 28 of 50 $\mu$m diameter and an inner cladding 30 of 350, $\mu$m diameter. The second outer polymer cladding 32 was stripped from the end portion 27 of the LACDCF prior to splicing in the splicing region 34. The polymer cladding is stripped so that it would not burn during splicing. However, if a non-polymeric outer cladding is used, it does not need to be stripped from the inner cladding near the splicing region. Once the coupler is thus made, it is normally packaged by bonding it to a suitable substrate to preserve the alignment of the components.

Fig. 2 illustrates a transverse section view of the coupler arrangement of Fig. 1 along line A-A, namely essentially at the splicing position. The few-mode fiber 10 having its core 12 bundled and fused with multimode fibers 16 and 18, is aligned and spliced with the LACDCF 26 having a large area core 28 (shown in Fig. 1) that corresponds to core 12 in its modal content. When splicing the fused bundle of fibers 10, 16 and 18 with the LACDCF fiber 26, the periphery of the bundle is adapted to fit within the circumference of the inner cladding 30 of the LACDCF and, if necessary, should be tapered to achieve such size. This periphery does not need to cover the entire surface of end 25 of the inner cladding 30 of the LACDCF, but what is important is that the bundle and the few-mode fiber be so aligned with the LACDCF as to preserve the fundamental mode transmission from the few-mode fiber to the LACDCF. Essentially, this means that the core 12 should be precisely modally aligned with the large area core 28. This can be done by launching the fundamental mode of the few-mode fiber and monitoring the modal content at the input of the LACDCF with a near-field measurement device, such as a camera that images the fiber endface through an appropriate lens.. One then aligns the bundle and the LACDCF until a Gaussian mode field is obtained. The splice is then made and the modal field is checked again to verify that the modal content does not change. If the modal content has changed or was lost because of the splice, this may be due to stresses in the splice. The splice then needs to be reheated and reworked to optimize the modal content. When monitoring the modes, the LACDCF fiber should be straight or under a small amount of tension to prevent mode coupling that would effect the measurement. Such measurement should also be done at the wavelength of the operation or at a wavelength very close to it in order to produce best results.

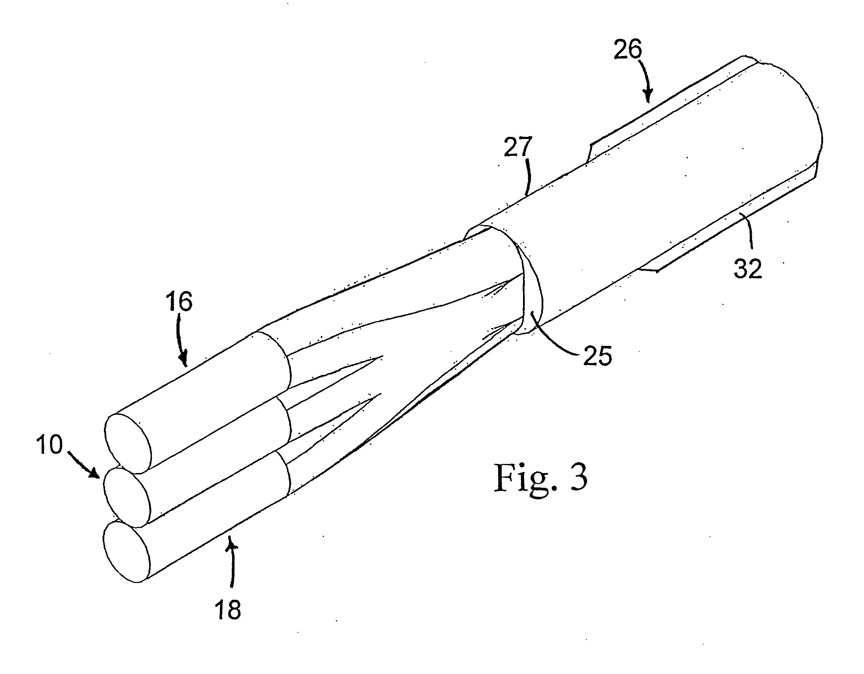

Fig. 3, which represents a perspective view of the coupler of Fig. 1, shows that the few-mode fiber 10 is positioned in the middle between multi-mode fibers 16 and 18 and is fused and spliced at the splicing end 25 with the LACDCF fiber 26. Near the splicing end 25, namely at the end portion 27, the polymer outer cladding 32 has been removed, so that the splicing is done within the circumference of the inner cladding of the LACDCF 26. The splicing would still be done within the circumference of the inner cladding of the LACDCF 26, even if a non-polymeric outer cladding were used, however, such outer cladding need not be removed from the end portion 27.

It is also possible to use any suitable number of multi-mode fibers 16, 18... N, bundled around the few-mode fiber 10. Thus, for example, one can place six multimode fibers having a diameter of 125 $\mu$m around a few mode fiber 10 also having a diameter of 125 $\mu$m. These fibers would be fused within the fusion region 20 to fit within the circumference of the inner cladding 30 of the LACDCF, and spliced within the splicing region 34 at end 25 to the LACDCF fiber 26 while preserving fundamental mode transmission from the few-mode fiber 10 to the LACDCF 26. As already described previously, this is achieved with proper modal alignment of the cores 12 and 28.

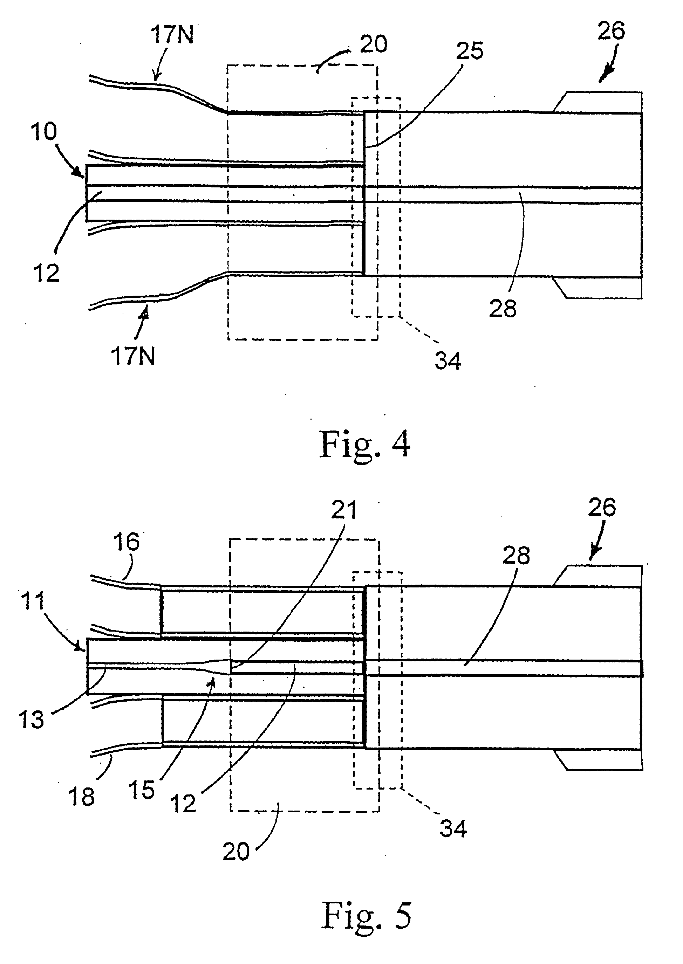

Fig. 4 illustrates that one can use, for example, seven multimode fibers 17N having a diameter of 220 $\mu$m, bundled around a 125 $\mu$m few- mode fiber 10. The fibers 17N are tapered to 125 $\mu$m diameter before fusing them in the fusion region 20. They are then spliced to the LACDCF fiber 26 in the splicing region 34 at end 25 of the LACDCF, after alignment to preserve the modal content of the feed-trough.

In general, when tapering the outer multimode fibers, one should not taper them more than the ratio:

$$R = \rho_0/\rho_i = NA_{MM}/NA_{DCF}$$

where R is the maximum taper ratio, $\rho_0$ is the final diameter of the multimode fiber, $\rho_i$ is the initial diameter of the multimode fiber $NA_{MM}$ is the numerical aperture of the multimode fiber $NA_{DCF}$ is the numerical aperture of the LACDCF inner cladding waveguide.

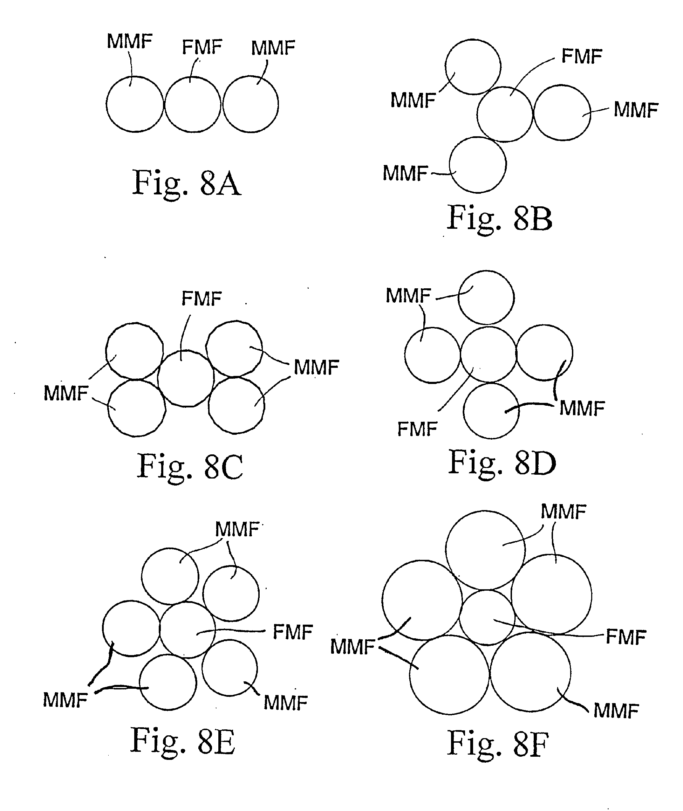

When tapering the outer multimode fibers, one can have any suitable number of such fibers bundled and then fused around a few-mode fiber, provided the above taper ratio is maintained. Some such bundle configurations are shown in Figs. 8A to 8L discussed below.

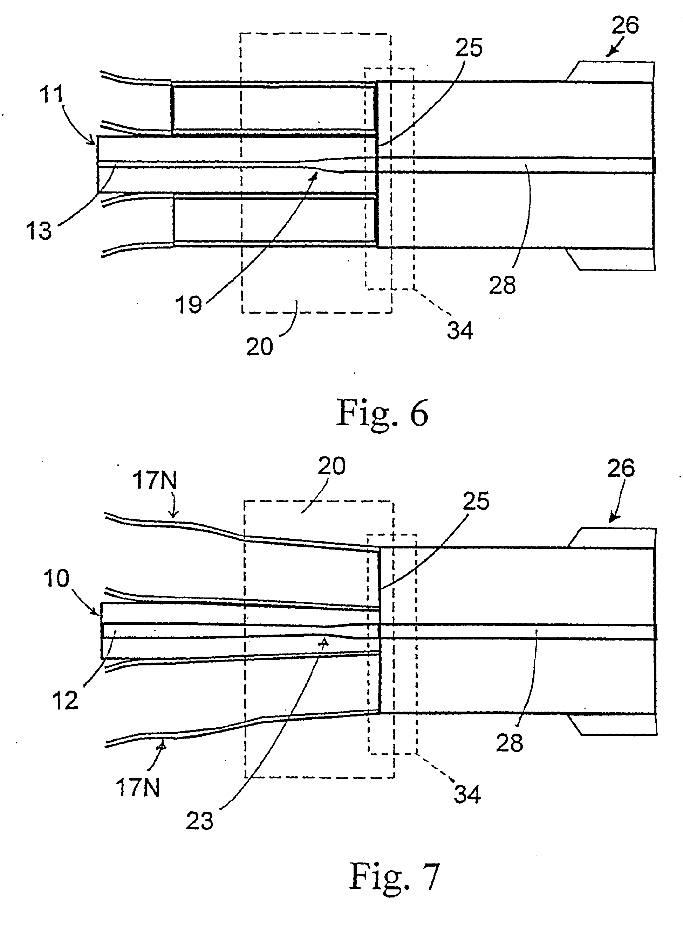

Further embodiments of the invention as illustrated in Figs. 5 and 6 relate to the adjustment of the mode field diameter of the signal fiber to the large area core of the double clad fiber.

Thus, in Fig. 5 the invention provides an adjustment of the mode field diameter of the signal fiber 11, which is a single-mode fiber having a 6$\mu$m core 13, to the LACDCF fiber 26 having a 50$\mu$m core 28. This is done by providing a mode converter to increase the size of the core as shown at 15 and splice it to a length of a few mode fiber at 21 so as to connect it with the 50$\mu$m core 12 of the few-mode fiber provided within the fusion region 20. Then, the few-mode fiber is fused in the fusion region 20 with the multimode fibers 16,18 and spliced with the LACDCF 26 in the splicing region 34 as already described previously, so that cores 12 and 28 are coupled to preserve the fundamental mode transmission from the few mode fiber to the LACDCF.

In another embodiment illustrated in Fig. 6, rather than using a mode converter to expand and splice a single-mode fiber to a length of a few-mode fiber, one can provide a mode converter to diffuse the core 13 of a single mode fiber 11 at 19 so that the core 13 is diffused within the fusion region 20 near the splicing surface 25, whereby the fiber 11 becomes few-moded over a few centimeters leading to the splicing region 34, where the fiber is aligned and spliced with the LACDCF 26. The core 13 is diffused at 19 to become a 50$\mu$m core that can be aligned and spliced with core 28 of the LACDCF 26 as described previously. This configuration is similar to that shown in Fig. 5, except there is no transitional few-mode fiber provided in the bundle.

Fig. 7 illustrates an expansion of the core 12 of the few-mode fiber 10 that has been narrowed while tapering the fibers 17N around it, as disclosed with reference to Fig. 4. This may happen in some cases due to a particular design of the bundle where one must taper the few-mode fiber because the diameter of the fused bundle is larger than the diameter of the internal cladding of the LACDCF, and one could not taper the outer multi-mode fibers more because of the relation of the numerical apertures as expressed in the ratio R above. In such as case, one can expand the core 12 of the few-mode fiber 10 using the mode converter referred to above, for example at location 23 within the fusion region 20, and leading to the splicing region 34. This expansion is done so that the core of the few-mode fiber at the splicing surface 25 will match core 28 of the LACDCF 26 and produce the required modal content of the feed-through. It is important to note that when additional tapering is done, the total tapering of the pump fibers should not exceed the R ratio referred to above. Any tapering in excess of that ratio will cause extra loss.

The mode converter mentioned above with reference to Figs. 5, 6 and 7 is usually produced by heating the fiber to a high temperature such that the germanium, which is present as a dopant in the fiber core, diffuses into the cladding, thereby increasing the size of the core and thus of the mode. At one point of such diffusion process, the mode field diameter of the expanded core becomes equal to that of the large area core of the DCF and at this point the heating is stopped and the mode conversion is completed.

In the various bundles and particularly in the tapered bundles, it is important to respect the symmetry around the few-mode fiber as much as possible, so that the fusion process does not asymmetrically deform the core of the few-mode fiber, which would make it difficult to produce a good splice. However, if the number of fibers is large, for example greater than 19, one does not need to be too careful in preserving the symmetry of the structure so long as the signal fiber remains essentially in the center of the fiber bundle. The deformation of the core will be negligible, even with high fusion and tapering of the outer multimode fibers.

Figs. 8A to 8L illustrate different fiber configurations that can be used in accordance with the present invention within bundles to be coupled with LACDCF. It should be noted that these configurations are not limitative.

Thus, Fig. 8A shows a configuration of 3x1 or (2+1) x1, such as already described with reference to Figs. 1, 2 and 3, namely where three fibers are coupled with one LACDCF. In this case, the middle signal fiber FMF is a few-mode fiber and the two outer pump fibers MMF are multimode fibers.

Fig. 8B illustrates a 4x1 or (3+1) x1 configuration, again with the FMF in the middle and three MMF surrounding it in symmetrical manner.

Figs. 8C and 8D illustrate two symmetrical configurations of 5 x 1 or (4+1) xl bundles that can be used in accordance with this invention. The FMF is located in the middle and is symmetrically surrounded by MMF fibers.

Figs. 8E and 8F show two 6x1 or (5+1) xl configurations. In Fig. 8E the FMF is surrounded by 5 MMF fibers of same diameter and in Fig. 8F the central FMF is surrounded by 5 larger MMF pump fibers.

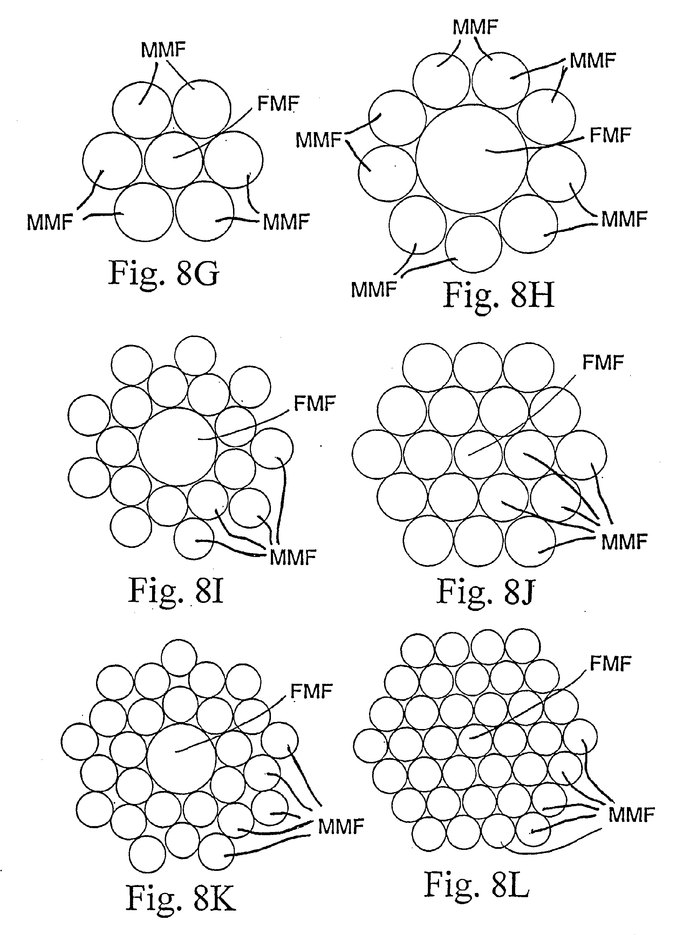

Fig. 8G shows a 7x1 or (6+1) x1 configuration where the central FMF is surrounded by 6 MMF pump fibers of same size.

Fig. 8H illustrates a (9+1) x1 configuration where the central FMF is significantly larger than the 9 surrounding MMF pump fibers.

Fig. 8I shows a configuration of (18+1) x1 where the central FMF is larger than the 18 surrounding MMF pump fibers. In this case, only a few of the surrounding fibers have been identified as MMF fibers, but all of them can be MMF fibers, although if not all ports are needed, some of them can be replaced by dummy fibers, namely pure silica coreless fibers.

Fig. 8J illustrates a 19x1 or (18+1) xl configuration where the central FMF is surrounded by 18 MMF fibers of same size. Again, if some of the MMF ports are not needed, they can be replaced by dummy fibers and this applies to all configurations.

Fig. 8K shows a 19x1 or (18+1) xl configuration where a large diameter FMF is surrounded by 18 MMF pump fibers.

Finally, Fig. 8L illustrates a 37x1 or (36+1) xl configuration where a central FMF is surrounded by 36 MMF pump fibers of same diameter.

By way of example, for a reduction of the pump fibers by a factor of 2, namely reducing 125 μm diameter pump fibers to 65 μm, one can place 9 fibers around the 125μm signal fiber as illustrated in Fig. 8H. One can also add another layer of the pump fibers to form a configuration of 18 pump fibers around one signal fiber as shown in Fig. 8I. One can further add an additional layer of pump fibers to produce 27 pump fibers surrounding a signal fiber as shown in Fig. 8K. With 27 pump fibers, the configuration fits within a 400μm diameter LACDCF.

In a further example, if the pump fibers are 220μm in diameter with 0.22 numerical aperture, one can reduce them to 125μm diameter and bundle them around a 125μm central signal fiber. This can produce configurations where all fibers are of equal size as illustrated in Figs. 8A, 8B, 8C, 8D, 8E, 8G, 8J and 8L. The configurations of 7x1 shown in Fig. 8G, 19x1 shown in Fig. 8J and 37x1 shown in Fig. 8L are close-pack configurations, meaning that there is essentially no space left between the fibers.

It should be noted that the invention is not limited to the specific embodiments described above, but that various modifications obvious to those skilled in the art may be made without departing from the invention and the scope of the following claims.

**Claims**

1. An optical coupler comprising:

   a bundle comprising a plurality of multimode fibers (16, 18) and a signal fiber (10), said bundle comprising a fused end portion with an output end having a periphery, said signal fiber being substantially located at the center of said fused end portion, said signal fiber being a fiber having a core through which an optical signal is to be transmitted; and
   a double cladding fiber, DCF, (26) having a core (28) through which said signal is to be transmitted, an inner cladding (30) having a first refractive index, and an outer cladding (32) having a second refractive index, said DCF (26) having an end portion (27) terminated by an input end (25) having a predetermined circumference;
   **characterized in that**:

   said signal fiber (10) of said bundle is a few-mode fiber (10);
   said DCF (26) is a large area core DCF, LACDCF, (26); and
   said output end of said bundle and said input end (25) of said LACDCF (26) are aligned and fusion-spliced such that said periphery of said output end of said bundle fits within said predetermined circumference of said inner cladding at said input end of said LACDCF, and such that said core of said few-mode fiber is precisely modally aligned and matched with said core of said LACDCF such as to preserve fundamental mode transmission from said core of said few-mode fiber to said core of said LACDCF (26), and wherein the few-mode fiber (10) at the output end is a fiber with a core expanded from a single mode fiber.

2. An optical coupler according to claim 1, **characterized in that** the outer cladding (32) of the LACDCF (26) is a polymer cladding and said polymer outer cladding (32) is removed from the end portion (27) of the LACDCF (26).

3. An optical coupler according to claims 1 or 2, **characterized in that** the multimode fibers (16, 18) are tapered before being fused at the output end, in order to fit within the circumference of the inner cladding (30) of the input end (25) of the LACDCF (26).

4. An optical coupler according to claim 3, **characterized in that** the multimode fibers (16, 18) are tapered and fused in such a way as not to affect the fundamental mode transmission in the core (12) of the few-mode fiber (10).

5. An optical coupler according to any one of claims 1 to 4, **characterized in that** the plurality of multimode fibers (16, 18) is placed essentially symmetrically around the few mode fiber (10) within the bundle.

6. An optical coupler according to any one of claims 1 to 5, **characterized in that** at least one of the plurality of multimode fibers (16, 18) in the bundle is replaced by a dummy fiber.

7. A method for forming an optical coupler, said method comprising:

   a. bundling a central signal fiber (10) with a plurality of surrounding multimode fibers (16, 18) so that said surrounding multimode fibers are positioned essentially symmetrically around said central signal fiber, said signal fiber being a fiber having a core through which an optical signal is to be transmitted, said bundle having an end portion;
   b. fusing said end portion of said bundle, said fused end portion having an output end having a periphery;
   c. providing a double cladding fiber, DCF, (26) having a core (28) through which said optical signal is to be transmitted, an inner cladding (30) having a first refractive index and an outer cladding (32) having a second refractive index which is lower than said first refractive index, said inner cladding having a predetermined circumference, said DCF (26) having an end portion (27) terminating with an input end (25);
   d. splicing said output end of said fused end portion of said bundle to said input end (25) of said DCF (26);
   **characterized in that**:

   said central signal fiber (10) of said bundle is a few-mode fiber (10);
   said DCF (26) is a large area core DCF, LACDCF (26);
   said output end of said fused end portion of said bundle and said input end (25) of said LACDCF (26) are aligned and spliced such that said periphery of said output end of said bundle fits within said predetermined circumference of said inner cladding at said input end of said LACDCF, and such that said core of said few-mode fiber is precisely modally aligned and matched with said core of said LACDCF such as to preserve a fundamental mode transmission from said core of said few-mode fiber (10) to said core of said LACDCF (26), and wherein the few-mode fiber (10) has a core (12) near the output end of the bundle, which is expanded from an initial single-mode fiber core.

8. Method according to claim 7, **characterized in that** the outer cladding (32) of the LACDCF (26) is a polymer cladding and the method includes removing said polymer outer cladding (32) from the end portion (27) of the LACDCF (26) prior to splicing.

9. Method according to claims 7 or 8, **characterized in that** the multimode fibers (16, 18) at the output end of the bundle are tapered prior to being fused.

10. Method according to claim 9, **characterized in that** the tapering is done according to the following maximum taper ratio:

$$R = \rho_o/\rho_i = NA_{NM}/NA_{DCF}$$

Where R is the maximum taper ratio
$\rho_o$ is the final diameter of the multimode fiber
$\rho_i$ is the initial diameter of the multimode fiber
$NA_{NM}$ is the numerical aperture of the multimode fiber
$NA_{DCF}$ is the numerical aperture of the LACDCF inner cladding waveguide.

**11.** Method according to claims 9 or 10, **characterized in that** the tapering of the multimode fibers (16, 18) followed by fusing of the bundle is done so as not to affect the modal size of the core (12) of the few-mode fiber (10).

**12.** Method according to claims 9 or 10, **characterized in that** the tapering of the multimode fibers (16, 18) followed by fusing of the bundle decreases the modal size of the core (12) of the few-mode fiber (10), when said core (12) had been expanded prior to bundling.

**13.** Method according to claims 12, **characterized in that** the expansion is done by means of a mode converter to increase the size of the core.

**14.** Method according to claims 12, **characterized in that** the expansion is done by heating to a high temperature such that germanium present in the core diffuses into the cladding, thereby increasing the size of the core and of the mode.

**15.** Method according to any one of claim 7 to 14, **characterized in that** the cores (12, 28) of the few mode fiber (10) and of the LACDCF (26) are precisely modally aligned by launching the fundamental mode of the few-mode fiber (10) while monitoring the modal content at the input end (25) of the LACDCF (26) by means of a near field measurement device and aligning the output end of the bundle and the input end (25) of the LACDCF (26) until a Gaussian mode field is obtained.

**16.** Method according to claim 15, **characterized in that** the LACDCF (26) is kept straight or under a small tension, when monitoring the modes by the near field measurement device, and the measurement is done at or near operational wavelength.

**17.** Method according to claims 15 or 16, **characterized in that** the coupler is packaged by bonding it to a suitable substrate to preserve the alignment of the components.


**Patentansprüche**

**1.** Optokoppler, der umfasst:

ein Bündel, das eine Mehrzahl von Multi-Mode-Fasern (16, 18) und eine Signalfaser (10) umfasst, wobei das Bündel einen fusionierten Endabschnitt mit einem Ausgangsende mit einer Peripherie umfasst, wobei die Signalfaser im Wesentlichen in der Mitte des fusionierten Endabschnitts angeordnet ist, wobei die Signalfaser eine Faser mit einem Kern ist, durch den ein optisches Signal zu übertragen ist; und

eine Doppelmantelfaser, DCF, (26) mit einem Kern (28), durch den das Signal zu übertragen ist, wobei ein Innenmantel (30) einen ersten Brechungsindex aufweist und ein Außenmantel (32) einen zweiten Brechungsindex aufweist, wobei die DCF (26) einen Endabschnitt (27) aufweist, der von einem Eingangsende (25) mit einem vorab festgelegten Umfang begrenzt wird; **dadurch gekennzeichnet, dass**:

die Signalfaser (10) des Bündels eine Few-Mode-Faser (10) ist;
die DCF (26) eine DCF mit großflächigem Kern, LACDCF, (26) ist; und
das Ausgangsende des Bündels und das Eingangsende (25) der LACDCF (26) ausgerichtet und fusionsgespleißt sind, so dass die Peripherie des Ausgangsendes des Bündels in den vorab festgelegten Umfang des Innenmantels am Eingangsende der LACDCF passt und so dass der Kern der Few-Mode-Faser mit dem Kern der LACDCF exakt modal ausgerichtet und abgestimmt ist, um eine Grundmodenübertragung vom Kern der Few-Mode-Faser zum Kern der LACDCF (26) zu bewahren, und wobei die Few-Mode-Faser (10) am Ausgangsende eine Faser mit einem Kern ist, der von einer Single-Mode-Faser expandiert ist.

**2.** Optokoppler nach Anspruch 1, **dadurch gekennzeichnet, dass** der Außenmantel (32) der LACDCF (26) ein Polymermantel ist und der Polymeraußenmantel (32) vom Endabschnitt (27) der LACDCF (26) entfernt ist.

**3.** Optokoppler nach Anspruch 1 oder 2, **dadurch gekennzeichnet, dass** die Multi-Mode-Fasern (16, 18) verjüngt werden, bevor sie am Ausgangsende fusioniert werden, um in den Umfang des Innenmantels (30) des Eingangsendes (25) der LACDCF (26) zu passen.

**4.** Optokoppler nach Anspruch 3, **dadurch gekennzeichnet, dass** die Multi-Mode-Fasern (16, 18) derart verjüngt und fusioniert sind, dass die Grundmodenübertragung im Kern (12) der Few-Mode-Faser (10) nicht beeinflusst wird.

**5.** Optokoppler nach einem der Ansprüche 1 bis 4, **dadurch gekennzeichnet, dass** die Mehrzahl von Multi-Mode-Fasern (16, 18) im Wesentlichen symmetrisch um die Few-Mode-Faser (10) innerhalb des Bündels platziert ist.

**6.** Optokoppler nach einem der Ansprüche 1 bis 5, **dadurch gekennzeichnet, dass** zumindest eine der Mehrzahl von Multi-Mode-Fasern (16, 18) im Bündel durch eine Blindfaser ersetzt ist.

7. Verfahren zum Bilden eines Optokopplers, wobei das Verfahren umfasst:

a. Bündeln einer zentralen Signalfaser (10) mit einer Mehrzahl von umgebenden Multi-Mode-Fasern (16, 18), so dass die umgebenden Multi-Mode-Fasern im Wesentlichen symmetrisch um die zentrale Signalfaser positioniert sind, wobei die Signalfaser eine Faser mit einem Kern ist, durch den ein optisches Signal zu übertragen ist, wobei das Bündel einen Endabschnitt aufweist;

b. Fusionieren des Endabschnitts des Bündels, wobei der fusionierte Endabschnitt ein Ausgangsende mit einer Peripherie aufweist;

c. Bereitstellen einer Doppelmantelfaser, DCF, (26) mit einem Kern (28), durch den das optische Signal zu übertragen ist, wobei ein Innenmantel (30) einen ersten Brechungsindex aufweist und ein Außenmantel (32) einen zweiten Brechungsindex aufweist, der geringer als der erste Brechungsindex ist, wobei der Innenmantel einen vorab festgelegten Umfang hat, wobei die DCF (26) einen Endabschnitt (27) ist, der von einem Eingangsende (25) begrenzt wird;

d. Spleißen des Ausgangsendes des fusionierten Endabschnitts des Bündels mit dem Eingangsende (25) der DCF (26);

**dadurch gekennzeichnet, dass**:

die zentrale Signalfaser (10) des Bündels eine Few-Mode-Faser (10) ist;
die DCF (26) eine DCF mit großflächigem Kern, LACDCF, (26) ist; und
das Ausgangsende des fusionierten Endabschnitts des Bündels und das Eingangsende (25) der LACDCF (26) ausgerichtet und gespleißt sind, so dass die Peripherie der Ausgangsendes des Bündels in den vorab festgelegten Umfang des Innenmantels am Eingangsende der LACDCF passt und so dass der Kern der Few-Mode-Faser mit dem Kern der LACDCF exakt modal ausgerichtet und abgestimmt ist, um eine Grundmodenübertragung vom Kern der Few-Mode-Faser (10) zum Kern der LACDCF (26) zu bewahren, und wobei die Few-Mode-Faser (10) einen Kern (12) nahe dem Ausgangsende des Bündels aufweist, der von einer ursprünglichen Single-Mode-Faser expandiert ist.

8. Verfahren nach Anspruch 7, **dadurch gekennzeichnet, dass** der Außenmantel (32) der LACDCF (26) ein Polymermantel ist und das Verfahren das Entfernen des Polymeraußenmantels (32) vom Endabschnitt (27) der LACDCF (26) vor dem Spleißen umfasst.

9. Verfahren nach Anspruch 7 oder 8, **dadurch gekennzeichnet, dass** die Multi-Mode-Fasern (16, 18) am Ausgangsende des Bündels verjüngt werden, bevor sie fusioniert werden.

10. Verfahren nach Anspruch 9, **dadurch gekennzeichnet, dass** das Verjüngen gemäß dem folgenden Verjüngungsverhältnis durchgeführt wird:

$$R = p_o/p_i = NA_{NM}/NA_{DCF}$$

wobei R das maximale Verjüngungsverhältnis ist, $p_o$ der Enddurchmesser der Multi-Mode-Faser ist, $p_i$ der Ausgangsdurchmesser der Multi-Mode-Faser ist, $NA_{NM}$ die numerische Apertur der Multi-Mode-Faser ist, $NA_{DCF}$ ist numerische Apertur des LACDCF-Innenmantel-Wellenleiters ist.

11. Verfahren nach Anspruch 9 oder 10, **dadurch gekennzeichnet, dass** das Verjüngen der Multi-Mode-Fasern (16, 18), auf das das Fusionieren des Bündels folgt, durchgeführt wird, um die modale Größe des Kerns (12) der Few-Mode-Faser (10) nicht zu beeinflussen.

12. Verfahren nach Anspruch 9 oder 10, **dadurch gekennzeichnet, dass** das Verjüngen der Multi-Mode-Fasern (16, 18), auf das das Fusionieren des Bündels erfolgt, die modale Größe des Kerns (12) der Few-Mode-Faser (10) verringert, wenn der Kern (12) vor dem Bündeln expandiert wurde.

13. Verfahren nach Anspruch 12, **dadurch gekennzeichnet, dass** das Expandieren mithilfe eines Modenkonverters durchgeführt wird, um die Größe des Kerns zu erhöhen.

14. Verfahren nach Anspruch 12, **dadurch gekennzeichnet, dass** das Expandieren durch Erhitzen auf eine hohe Temperatur durchgeführt wird, so dass im Kern vorhandenes Germanium in den Mantel diffundiert, wodurch die Größe des Kerns und der Mode erhöht wird.

15. Verfahren nach einem der Ansprüche 7 bis 14, **dadurch gekennzeichnet, dass** die Kerne (12, 28) der Few-Mode-Faser (10) und der LACDCF (26) exakt modal ausgerichtet werden, indem die Grundmode der Few-Mode-Faser (10) gestartet wird, während der modale Gehalt am Eingangsende (25) der LACDCF (26) mithilfe einer Nahfeld-Messvorrichtung gemessen wird, und das Ausgangsende des Bündels und das Eingangsende (25) der LACDCF (26) ausgerichtet werden, bis eine Gaußsche Mode erhalten wird.

**16.** Verfahren nach Anspruch 15, **dadurch gekennzeichnet, dass** die LACDCF (26) gerade oder unter geringer Spannung gehalten wird, wenn die Moden von der Nahfeld-Messvorrichtung überwacht werden, und das Messen bei oder nahe Betriebswellenlänge durchgeführt wird.

**17.** Verfahren nach Anspruch 15 oder 16, **dadurch gekennzeichnet, dass** der Koppler durch Binden davon an ein geeignetes Substrat verpackt wird, um die Ausrichtung der Komponenten zu bewahren.

**Revendications**

**1.** Coupleur optique comprenant :

un faisceau comprenant une pluralité de fibres multimodales (16, 18) et une fibre de signal (10), ledit faisceau comprenant une partie extrémité fusionnée avec une extrémité de sortie présentant une périphérie, ladite fibre de signal étant essentiellement située au centre de ladite partie extrémité fusionnée, ladite fibre de signal étant une fibre présentant une âme à travers laquelle doit être transmis un signal optique ; et une fibre double gaine, DCF, (26) présentant une âme (28) à travers laquelle doit être émis le signal, une gaine intérieure (30) présentant un premier indice de réfraction, et une gaine extérieure (32) présentant un second indice de réfraction, ladite DCF (26) présentant une partie extrémité (27) terminée par une extrémité d'entrée (25) présentant une circonférence prédéterminée ;
**caractérisé en ce que** :

ladite fibre de signal (10) dudit faisceau est une fibre quasi unimodale (10) ; ladite DCF (26) est une DCF à âme à grande superficie, LACDCF, (26) ; et ladite extrémité de sortie dudit faisceau et ladite extrémité d'entrée (25) de ladite LACDCF (26) sont alignées et ligaturées par fusion de telle sorte que ladite périphérie de ladite extrémité de sortie dudit faisceau s'ajuste dans ladite circonférence prédéterminée de ladite gaine intérieure au niveau de ladite extrémité d'entrée de ladite LACDCF, et de telle sorte que ladite âme de ladite fibre quasi unimodale est appariée et alignée de manière modale précise avec ladite âme de ladite LACDCF de manière à préserver une transmission modale fondamentale à partir de ladite âme de ladite fibre quasi unimodale vers ladite âme de ladite LACDCF (26), et dans lequel la fibre quasi unimodale (10) au niveau de l'extrémité de sortie est une fibre comprenant une âme expansée à partir d'une fibre monomodale.

**2.** Coupleur optique selon la revendication 1, **caractérisé en ce que** la gaine extérieure (32) de la LACDCF (26) est une gaine polymère et ladite gaine extérieure polymère (32) est retirée de la partie extrémité (27) de la LACDCF (26).

**3.** Coupleur optique selon la revendication 1 ou 2, **caractérisé en ce que** les fibres multimodales (16, 18) sont profilées avant d'être fusionnées au niveau de l'extrémité de sortie, afin de s'ajuster dans la circonférence de la gaine intérieure (30) de l'extrémité d'entrée (25) de la LACDCF (26).

**4.** Coupleur optique selon la revendication 3, **caractérisé en ce que** les fibres multimodales (16, 18) sont profilées et fusionnées de manière à ne pas affecter la transmission modale fondamentale dans l'âme (12) de la fibre quasi unimodale (10).

**5.** Coupleur optique selon l'une quelconque des revendications 1 à 4, **caractérisé en ce que** la pluralité de fibres multimodales (16, 18) est placées de manière essentiellement symétrique autour de la fibre quasi unimodale (10) au sein du faisceau.

**6.** Coupleur optique selon l'une quelconque des revendications 1 à 5, **caractérisé en ce qu'**au moins une fibre parmi la pluralité de fibres multimodales (16, 18) du faisceau est remplacée par une fibre factice.

**7.** Procédé permettant de former un coupleur optique, ledit procédé comprenant les étapes consistant à :

a. réunir en faisceau une fibre de signal centrale (10) avec une pluralité de fibres multimodales (16, 18) environnantes, de sorte que lesdites fibres multimodales environnantes sont positionnées de manière essentiellement symétrique autour de ladite fibre de signal centrale, ladite fibre de signal étant une fibre présentant une âme à travers laquelle doit être émis un signal optique, ledit faisceau présentant une partie extrémité ;
b. fusionner ladite partie extrémité dudit faisceau, ladite partie extrémité fusionnée présentant une extrémité de sortie présentant une périphérie ;
c. fournir une fibre double gaine, DCF, (26) présentant une âme (28) à travers laquelle doit être transmis ledit signal optique, une gaine intérieure (30) présentant un premier indice de réfraction et une gaine extérieure (32) présentant un second indice de réfraction qui est inférieur audit premier indice de réfraction, ladite gaine intérieure présentant une circonférence prédéterminée, ladite DCF (26) présentant une partie extrémité (27) se terminant par une extrémité d'entrée (25) ;

d. ligaturer ladite extrémité de sortie de ladite partie extrémité fusionnée dudit faisceau sur ladite extrémité d'entrée (25) de ladite DCF (26) ; **caractérisé en ce que** :

ladite fibre de signal centrale (10) dudit faisceau est une fibre quasi unimodale (10) ; ladite DCF (26) est une DCF à âme à grande superficie, LACDCF, (26) ;

ladite extrémité de sortie de ladite partie extrémité fusionnée dudit faisceau et ladite extrémité d'entrée (25) de ladite LACDCF (26) sont alignées et ligaturées de telle sorte que ladite périphérie de ladite extrémité de sortie dudit faisceau s'ajuste dans ladite circonférence prédéterminée de ladite gaine intérieure au niveau de ladite extrémité d'entrée de ladite LACDCF, et de telle sorte que ladite âme de ladite fibre quasi unimodale est appariée et alignée de manière précise modale avec ladite âme de ladite LACDCF de manière à préserver une transmission modale fondamentale à partir de ladite âme de ladite fibre quasi unimodale (10) vers ladite âme de ladite LACDCF (26), et dans lequel la fibre quasi unimodale (10) présente une âme (12) à proximité de l'extrémité de sortie du faisceau, qui est expansée à partir d'une âme de fibre monomodale initiale.

8. Procédé selon la revendication 7, **caractérisé en ce que** la gaine extérieure (32) de la LACDCF (26) est une gaine polymère et le procédé comprend une étape consistant à retirer ladite gaine extérieure polymère (32) à partir de la partie extrémité (27) de la LACDCF (26) préalablement à l'étape consistant à ligaturer.

9. Procédé selon la revendication 7 ou 8, **caractérisé en ce que** les fibres multimodales (16, 18) au niveau de l'extrémité de sortie du faisceau sont profilées avant d'être fusionnées.

10. Procédé selon la revendication 9, **caractérisé en ce que** l'étape consistant à profiler est mise en oeuvre en respectant le rapport de profilage maximum ci-dessous :

$$R = \rho_o / \rho_i = NA_{NM} / NA_{DCF}$$

où R est le rapport de profilage maximum
$\rho_o$ est le diamètre final de la fibre multimodale
$\rho_i$ est le diamètre initial de la fibre multimodale
$NA_{NM}$ est l'ouverture numérique de la fibre multimodale
$NA_{DCF}$ est l'ouverture numérique du guide d'onde de gaine intérieure de LACDCF.

11. Procédé selon la revendication 9 ou 10, **caractérisé en ce que** l'étape consistant à profiler les fibres multimodales (16, 18) suivie de l'étape consistant à fusionner le faisceau est mise en oeuvre de manière à ne pas affecter la taille modale de l'âme (12) de la fibre quasi unimodale (10).

12. Procédé selon la revendication 9 ou 10, **caractérisé en ce que** l'étape consistant à profiler les fibres multimodales (16, 18) suivie de l'étape consistant à fusionner le faisceau diminue la taille modale de l'âme (12) de la fibre quasi unimodale (10) lorsque ladite âme (12) a été expansée avant l'étape consistant à réunir en faisceau.

13. Procédé selon la revendication 12, **caractérisé en ce que** l'expansion est réalisée au moyen d'un convertisseur de mode afin d'augmenter la taille de l'âme

14. Procédé selon la revendication 12, **caractérisé en ce que** l'expansion est réalisée par chauffage à une température élevée de sorte que du germanium présent dans l'âme diffuse dans la gaine, ce qui augmente la taille de l'âme et du mode.

15. Procédé selon l'une quelconque des revendications 7 à 14, **caractérisé en ce que** les âmes (12, 28) de la fibre quasi unimodale (10) et de la LACDCF (26) sont alignées de manière modale précise en injectant le mode fondamental de la fibre quasi unimodale (10) tout en surveillant le contenu modal au niveau de l'extrémité d'entrée (25) de la LACDCF (26) au moyen d'un dispositif de mesure en champ proche et en alignant l'extrémité de sortie du faisceau et l'extrémité d'entrée (25) de la LACDCF (26) jusqu'à ce qu'un champ modal gaussien soit obtenu.

16. Procédé selon la revendication 15, **caractérisé en ce que** la LACDCF (26) est maintenue droite ou sous une faible tension, pendant la surveillance des modes grâce au dispositif de mesure en champ proche, et la mesure est effectuée à une ou au voisinage d'une longueur d'onde fonctionnelle.

17. Procédé selon la revendication 15 ou 16, **caracté-**

**risé en ce que** le coupleur est conditionné par liaison à un substrat approprié afin de préserver l'alignement des composants.

Fig. 1

Fig. 2

Fig. 3

EP 1 664 869 B1

Fig. 4

Fig. 5

Fig. 6

Fig. 7

MMF    FMF    MMF

Fig. 8A

MMF    FMF

MMF    MMF

MMF

Fig. 8B

FMF

MMF    MMF

Fig. 8C

MMF

FMF    MMF

Fig. 8D

MMF

FMF

MMF    MMF

Fig. 8E

MMF

MMF    FMF

MMF

Fig. 8F

Fig. 8G

Fig. 8H

Fig. 8I

Fig. 8J

Fig. 8K

Fig. 8L

**EP 1 664 869 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4291940 A, Kawasaki
- US 4392712 A
- US 4330170 A
- US 4426215 A
- US 4550974 A
- US 5864644 A
- US 6434302 B
- US 20030128723 A
- US 6434302 A